# EUROPEAN PATENT SPECIFICATION

(11) **EP 1 983 694 B1**
(45) Date of publication and mention of the grant of the patent: **09.06.2010**
(21) Application number: 07720972.4
(22) Date of filing: 26.04.2007
(51) Int. Cl.: H04L 12/42, H04L 12/56

(54) **Method and device for transmitting packet in resilient packet intersect ring**
Verfahren und Vorrichtung zur Paketübertragung in widerstandsfähigen Paketüberschneidungsring
Procédé et dispositif de transmission de paquets sous forme d'un cercle d'intersections résilient à intersections de paquets

(30) Priority: 14.07.2006 CN 200610061668
(43) Date of publication of application: 22.10.2008
(73) Proprietor: Huawei Technologies Co., Ltd., Shenzhen, Guangdong Province 518129 (CN)
(72) Inventor: ZHANG, Zhongkai, Guangdong 518129 (CN)
(74) Representative: Hengelhaupt, Jürgen
(86) International application number: PCT/CN2007/001399
(87) International publication number: WO 2008/009193

(56) References cited:
- EP-A- 1 545 068
- EP-A2- 1 571 771
- CN-A- 1 747 452
- US-A1- 2003 012 129
- US-A1- 2003 012 129

## Description

This application claims the benefit of priority from China patent application No. 200610061668.2 filed on July 14, 2006, titled "Intersection Node and Method for Avoiding Broadcast Storm of the Resilient Packet Intersection Ring,".

### Field of the Invention

The present invention relates to the field of network communications technology, and in particular to a method and device for forwarding a packet of a Resilient Packet Ring (RPR).

### Background of the Invention

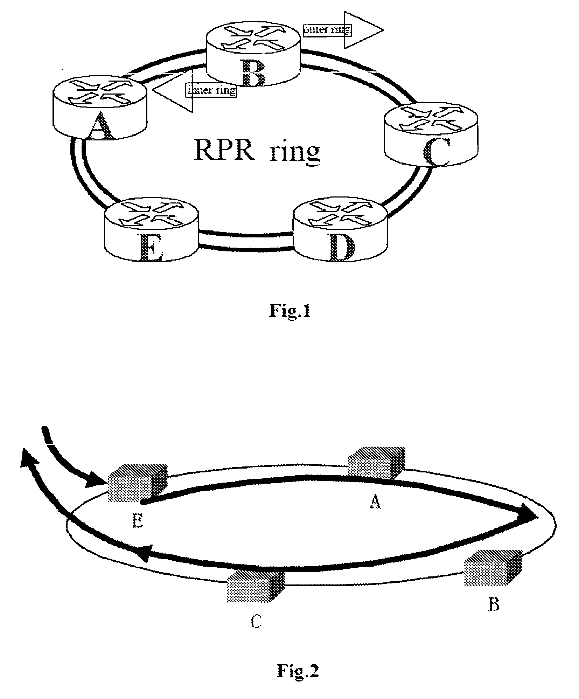

With the development of Metropolitan Area Network (MAN), a technique standard of a Resilient Packet Ring (RPR) is proposed. Figure 1 is a schematic diagram illustrating a topology structure of an RPR in the prior art. As shown in Figure 1, the RPR has a reverse dual-ring topology structure including an Outer Ring and an Inner Ring, and both the Outer Ring and the Inner Ring transmit data packet and control packet. The RPR is independent of a physical layer. The physical layer may be an Ethernet or a Synchronous Digital Hierarchy (SDH). The RPR technology combines facility of the Ethernet with reliability of a Wave Division Multiplex (WDM) device. As a new MAN standard, the RPR gradually gets the operators' favor due to advantages in many aspects, including an interface bandwidth, a carrier-class failure switching capacity, a high efficiency bandwidth utility, physical layer independent and so on, and each of the operators arranges the RPR in an access network.

Figure 2 is a schematic diagram illustrating broadcasting of the RPR in the prior art. In the RPR, when a packet can not find a corresponding node in a ring, as shown in Figure 2, the packet will be inserted to a data stream of the ring as a broadcast packet and the broadcast packet is stripped by a source node after a circulation on the ring.

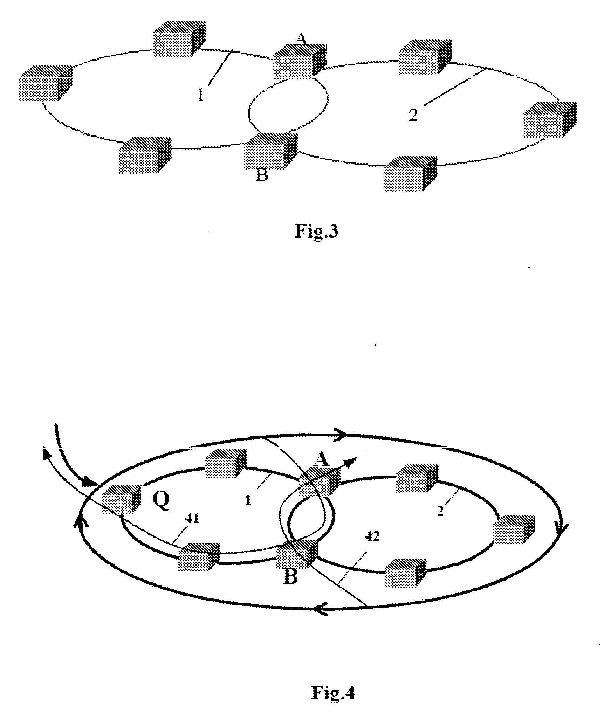

It is a better networking mode to build a network with at least two intersection RPR rings for expanding a RPR function in order to achieve more service expansion and extension and be adaptive to more actual application scenarios. Figure 3 is a schematic diagram illustrating a networking structure of two intersection RPR rings. As shown in Figure 3, taking two RPR rings as an example, an RPR ring 1 and an RPR ring2 intersect for networking, and a node A and a node B are intersection nodes.

However, according to characteristics of the RPR ring, if a packet can not find a copy node, the packet broadcasts in the RPR ring. Therefore, a problem of broadcast storm exists in an RPR ring intersection networking mode. Figure 4 is a schematic diagram illustrating the broadcast storm of RPR intersection rings in the prior art. As shown in Figure 4, taking the node A in the RPR ring 1 as an example, the operation principle for node B is same as that of node A, after a broadcast packet is inserted to a ring from a node Q, the broadcast packet broadcasts in the RPR ring 1 first. When the packet arrives at the node A, the packet is broadcast and copied in the RPR ring 1 continuously (as a thinner thread 41 shown in the Figure 4, the packet is stripped by the node Q), then a copied broadcast packet is span-ring inserted to the RPR ring2 to be broadcast in the RPR ring 2. When the packet arrives at the node B, the packet is broadcast and copied in the RPR ring 2 continuously (as a thinner thread 42 shown in the Figure 4, the packet is stripped by the node A), then a copied broadcast packet is span-ring inserted to the RPR ring 1 to be broadcast in the RPR ring 1 again. The above circulation is kept on without stopping, and this is the problem of broadcast storm existing in the RPR ring intersection networking mode.

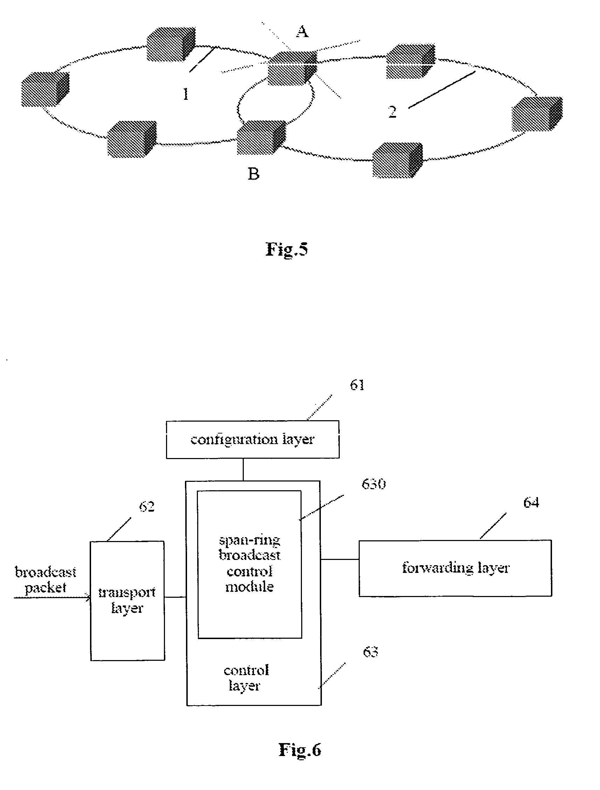

In order to solve the above problem of broadcast storm, a method of blocking a node is generally adopted in the prior art. A blocked node no longer forwards span-ring services, but may forward services in a single RPR ring normally. Figure 5 is a schematic diagram illustrating avoiding the broadcast storm of the RPR intersection rings in the prior art. As shown in Figure 5, one of two intersection nodes is blocked. Taking the node A as an example, when the node A is blocked, one of the intersection nodes of the two RPR rings is cut down, thus the intersection rings become tangent rings. In other words, the RPR ring1 is tangent to the RPR ring 2 at the node B. When a broadcast packet appears in the RPR ring 1, the broadcast packet in the RPR ring1 is stripped by the source node. After the broadcast packet is span-ring inserted to the RPR ring 2 at the node B, the broadcast packet broadcasts in the RPR ring 2. When the broadcast packet comes back to the node B, the broadcast packet is stripped because the node B is the source node. At this time, the broadcast storm may not appear since the node A is in a blocking state and can not forward span-ring services.

Although the problem of the broadcast storm is solved by blocking one of the two intersection nodes of the intersection rings, the intersection rings become tangent rings, causing a problem that the two intersection nodes cannot forward the span-ring packet at the same time. In addition, the existing technology may only be used to the intersection of two RPR rings and may not be applied to a case in which a plurality of RPR rings intersect.

US2003/0012129 discloses the following contents. A failure protection between interconnected adjacent Resilient Packet Rings (RPRS) in a multiple RPR network is provided. Two paths, a regular message path and a protection path, are provided between two adjacent RPRs. The regular path is used for routing inter-ring messages when no failure has occurred on the path. Messages are rerouted through the protection path when a failure occurs on the regular path. Each of these paths has two RPR interface nodes (one for each RPR) that are connected to an interconnection device (a layer 2 bridge or a layer-3 router) through interconnection links. Procedures for detecting failures and generating notifications for message rerouting and fault reports are executed at the interconnection devices. The procedures use periodic keep alive messages for diagnosing network segment and interconnection device failures. The fault detection and message rerouting are accomplished in less than 50 ms.

EP 1545068 discloses the following contents. A method is described herein for configuring a computer network managed by the IEEE Std 802.1s TM -2002 MSTP standard or any other equivalent standard such as IEEE Std 802.1Q TM -2003 in a fully- or semi-automatic manner such that: (1) if at all possible and in the case of a failure in the MSTP-based computer network affecting a Multiple Spanning Tree Instance (MSTI), MSTP reestablishes connectivity in that MSTI by preferably activating links whose activation ensures that the connectivity within a Virtual Local Area Network (VLAN) mapped onto and associated with that MSTI is not lost; and (2) a VLAN is mapped onto a MSTI whose active topology covers the topology of this VLAN, this being ensured by setting up that MSTI depending on the desired VLAN topology.

US2003/0154315 discloses the following contents. A data communications network includes a ring configured for spatial reuse, such as a resilient packer ring. A first bridge is coupled to the ring and to an end station such as an interworking bridge or router. A second bridge coupled to the ring learns an association between the first bridge and the end station by monitoring packets originated in the network by the end station and sent on the ring by the first bridge. The second bridge learns the association by obtaining an identifier of the first bridge and an address of the end station from received packets. When the second bridge receives packets destined for the end station, the packets are forwarded as broadcast transmissions on the ring if the association between the first bridge and the end station has not yet been learned, and are forwarded as unicast transmissions to the first bridge on the ring if the association between the first bridge and the end station has been learned.

### Summary of the Invention

The subject matter of the present invention is solely defined by the appended independent claims 1, 6 and 9. Preferred embodiments of the invention are defined by the appended dependent claims 2-5, 7-8, 10-12. Furthermore, in the following the words "invention" and "embodiments" are meant in the sense to be interpreted as used to explain technical background only and do not describe the scope of protection.

### Brief Description of the Drawings

Figure 1 is a schematic diagram illustrating a topology structure of a Resilient Packet Ring (RPR) in the prior art;

Figure 2 is a schematic diagram illustrating broadcasting of an RPR in the prior art;

Figure 3 is a schematic diagram illustrating a networking structure of two RPR intersection rings in the prior art;

Figure 4 is a schematic diagram illustrating a broadcast storm of RPR intersection rings in the prior art;

Figure 5 is a schematic diagram illustrating avoiding the broadcast storm of the RPR intersection rings in the prior art;

Figure 6 is a schematic diagram illustrating a structure of a device for forwarding a packet of an RPR intersection ring according to an embodiment of the present invention

Figure 7 is a schematic diagram illustrating a networking structure of three RPR intersection rings according to an embodiment of the present invention;

Figure 8 is a schematic diagram illustrating a structure of another device for forwarding a packet of an RPR intersection ring according to an embodiment of the present invention;

Figure 9 is a flow chart illustrating processing of a packet forwarding according to an embodiment of the present invention; and

Figure 10 is a schematic diagram illustrating a broadcasting of RPR intersection rings according to an embodiment of the present invention.

### Detailed Description of the Embodiments

Throughout the specification, the illustrated preferred embodiments and examples are illustrative of and may not be regarded as constraints for the present invention.

A device for forwarding a packet of RPR intersection rings provided by an embodiment of the present invention is a layer 2 network device or a layer 3 network device. Figure 6 is a schematic diagram illustrating the structure of the device for forwarding the packet of the RPR intersection ring according to an embodiment of the present invention. As shown in Figure 6, the device includes: a configuration layer 61, a transport layer 62, a control layer 63 and a forwarding layer 64. The control layer 63 further includes a span-ring broadcast control module 630. The configuration layer 61 sends a configuration to the span-ring broadcast control module 630 in the control layer 63 to create a span-ring broadcast control list. A packet is inserted to an intersection node, which is the device for forwarding a packet of the RPR intersection ring shown in Figure 6, from the transport layer 62. The control layer 63 controls whether the packet is allowed to be broadcast according to the span-ring broadcast control list, if the packet is allowed to be broadcast, sending the packet to the forwarding layer 64, otherwise disregarding the packet.

The span-ring broadcast control list is configured in the span-ring broadcast control module 630; when an intersection node receives a broadcast packet, the intersection node determines whether the span-ring broadcasting of the broadcast packet is allowed. The span-ring broadcast control list includes at least one of VLAN ID information, MAC address information, RPR ID information, IP address, whether allowing span-ring broadcasting and the like. By searching the span-ring broadcast control list, if the matching is successful, then the span-ring broadcasting of the broadcast packet is allowed according to the span-ring broadcast control list; otherwise, the broadcast packet is processed as default, in other words, the span-ring broadcasting of the broadcast packet is not allowed. Of course, other control modes may also be used, for example, information for forbidding the span-ring broadcast and so on is configured in the span-ring broadcast control list. By searching the span-ring broadcast control list, if the matching is successful, then the span-ring broadcasting of the broadcast packet is not allowed; otherwise, the broadcast packet is processed as default, in other words, the span-ring broadcasting of the broadcast packet is allowed.

If the span-ring broadcast control list controls the span-ring broadcast only through the VLAN ID, then whether the span-ring broadcasting of the broadcast packet is controlled merely by obtaining the VLAN ID of the broadcast packet. Similarly, the span-ring broadcast control list may control the span-ring broadcast through the MAC address information, the RPR ID information or the IP address.

If the span-ring broadcast is controlled by at least two identities in the span-ring broadcast control list, for example, the span-ring broadcast is controlled through the VLAN ID and the MAC address simultaneously; both the VLAN ID and the MAC address information need to be obtained for searching for the span-ring broadcast control list respectively. If the span-ring broadcast control list indicates to refuse, the span-ring broadcasting of the broadcast packet is not allowed; otherwise, the broadcast packet is processed as default, in other words, the span-ring broadcasting of all broadcast packets are allowed or not allowed.

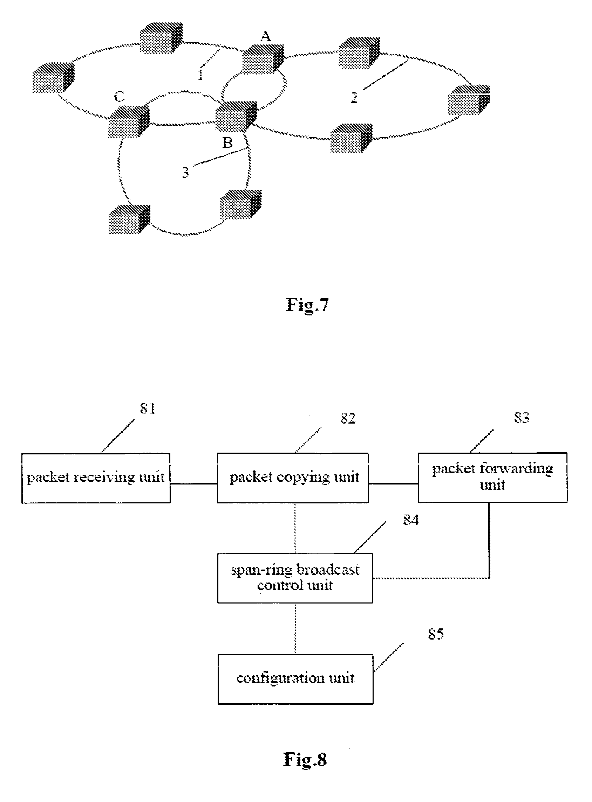

When a plurality of RPR rings intersect, as shown in Figure 7, taking an intersection among three RPR rings as an example, the intersection nodes obtained by the intersection between the RPR ring1 and the RPR ring2 include a node A and a node B, and the intersection nodes obtained by the intersection between the RPR ring1 and the RPR ring3 include a node B and a node C. Then the intersection node B may have a span-ring broadcast control list for performing an identical control strategy to the broadcast packets from the RPR ring1 to the RPR ring2 and the RPR ring3, and the intersection node B also may have two span-ring broadcast control lists for controlling the broadcast packets from the RPR ring1 to RPR ring2 and the broadcast packets from the RPR ring1 to RPR ring3 respectively, as long as it is guaranteed that the span-ring broadcasting of one broadcast packet is allowed through at most one intersection node.

Figure 8 is a schematic diagram illustrating a structure of another device for forwarding a packet of an RPR intersection ring provided by an embodiment of the present invention.

The device is a layer 2 network device or a layer 3 network device and is used as an intersection node of the RPR intersection rings for controlling the span-ring broadcasting of the broadcast packets from the RPR intersection rings. The device includes: a packet receiving unit 81, a packet copying unit 82, a packet forwarding unit 83 and a span-ring broadcast control unit 84.

The packet receiving unit 81 receives broadcast packets from other node devices on a first RPR ring in the RPR intersection rings. The packet copying unit 82 copies the broadcast packets to generate new broadcast packets. The operation of the packet forwarding unit 83 is controlled by the span-ring broadcast control unit 84 according to the identity information carried in the copied broadcast packets, in other words, it is controlled that whether the new broadcast packets can be inserted to a second RPR ring for broadcasting.

The identity information may be at least one of VLAN ID information, MAC address information, RPR ID information, IP address, and information for indicating whether allowing span-ring broadcasting. As described above, the information may be included in a span-ring broadcast control list preconfigured in the span-ring broadcast control unit 84. Then the span-ring broadcast control unit 84 may determine whether the span-ring broadcasting of a broadcast packet is allowed through searching the information in the span-ring broadcast control list. During searching the span-ring broadcast control list by the span-ring broadcast control unit 84, if the identity information carried in the copied broadcast packet matches the information in the span-ring broadcast control list, the span-ring broadcasting of the broadcast packet is allowed or not allowed according to the span-ring broadcast control list; otherwise, the broadcast packet is performed as default, in other words, the span-ring broadcasting of all the broadcast packets are allowed or not allowed.

If the span-ring broadcast control list controls the span-ring broadcast only through the VLAN ID, then whether the span-ring broadcasting of the broadcast packet is allowed is controlled only according to the VLAN ID of the broadcast packet. Similarly the span-ring broadcast control list may control the span-ring broadcast through the MAC address information, the RPR ID information or the IP address.

If the span-ring broadcast is controlled by at least two identities in the span-ring broadcast control list, for example, the span-ring broadcast is controlled through the VLAN ID and the MAC address simultaneously, both the VLAN ID and the MAC address information need to be obtained for searching the span-ring broadcast control list respectively. If the span-ring broadcast control list indicates to refuse, the span-ring broadcasting of the broadcast packet is not allowed; otherwise, the broadcast packet is processed as default, in other words, the span-ring broadcasting of all broadcast packets are allowed or not allowed.

When a plurality of RPR rings intersect, the span-ring broadcast control unit 84 may store a span-ring broadcast control list for performing an identical control strategy to the broadcast packets of all the RPR rings. The span-ring broadcast control unit 84 also may have two or more span-ring broadcast control lists for controlling the broadcast packets from different RPR rings respectively, as long as it is guaranteed that the span-ring broadcasting of a broadcast packet is allowed through at most one intersection node.

For making the device according to an embodiment of the present invention to be applied to different networking environments, as shown in Figure 8, a configuration unit 85 may be further configured in the device for transmitting configuration information to the span-ring broadcast control unit 84. The configuration information includes the control conditions for allowing the span-ring broadcasting of a broadcast packet, for example, the control condition may be the span-ring broadcast control list described above. It is obvious that by using the device for forwarding packets of the PRP intersection rings, not only the load balancing of the span-ring services may be achieved, but the span-ring broadcast storm may be avoided because each of the intersection nodes on the RPR intersection rings may apply a flexible control strategy for the span-ring broadcasting of packets.

Embodiments of the present invention may be applied to a plurality of intersection RPR rings and are easy to be implemented. Embodiments of the present invention have a better compatibility with an existing network and a lower cost.

Taking a networking mode with two RPR rings as shown in Figure 4 as an example, the method for forwarding packets of the RPR intersection rings according to an embodiment of the present invention is further described.

As shown in Figure 4, taking two RPR rings an example, the RPR ring1 intersects the RPR ring2 for networking. The node A and node B are intersection nodes. A broadcast packet carrying the VLAN information such as VLAN ID is inserted to the Node Q and is broadcast in the RPR ring1, when the broadcast packet reaches the intersection node A, the node A determines whether the broadcast packet can be inserted to the RPR ring2 for broadcasting according to the span-ring broadcast control list stored locally. Therefore, the problem of the span-ring broadcast storm is avoided.

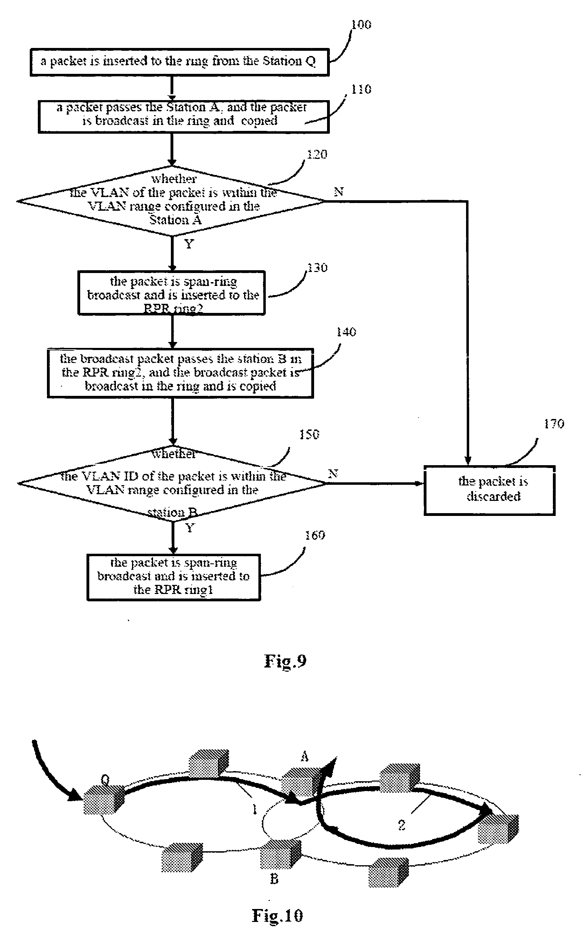

The VLAN range of the broadcast packets allowed passing is configured in the Node A and node B and the default is that all broadcast packets are not allowed to pass, so that only the broadcast packets within the VLAN range may be span-ring broadcast. Therefore, it is guaranteed that the intersection of the VLAN ranges of the broadcast packets allowed passing the Node A and the node B is empty, in other words, the intersection of the control conditions of allowing span-ring broadcasting for all the intersection nodes is empty. For example, if a VLAN range configured on the Node A is 1-2048, then for all the broadcast packets passing the Node A, the span-ring broadcasting of the broadcast packets within the range of 1-2048 may be performed and the broadcast packets within the range of 1-2048 may be inserted to the RPR ring2. A range of 2049-4094 is configured for the node B. After the above configuration and implementation, the broadcast storm is avoided while both node A and node B are ensured to forward span-ring services. The packet forwarding process for the RPR intersection rings according to the embodiment of the present invention shown in Figure 9 includes the following.

Block 100: A broadcast packet with a VLAN ID of 1000 is inserted to the RPR ring1 from the Node Q and is broadcast in the RPR ring1.

Block 110: The broadcast packet reaches the Node A, and is copied from the Node A while being broadcast in the RPR ring1.

Block 120. According to the identity information carried in the copied broadcast packet, it is determined that whether the broadcast packet is allowed to be span-ring inserted to the RPR ring2 for broadcasting, in other words, the configuration information on the Node A is searched for judging whether span-ring broadcasting is allowed; if it is allowed, performing the block 130; otherwise, performing the block 170. Since the VLAN ID of the broadcast packet in this embodiment is 1000 and is within the range of 1-2048, the copied broadcast packet is allowed to be inserted to the RPR ring2 and be broadcast in the RPR ring2.

Block 130: The span-ring broadcasting of the packet is allowed, in other words, the copied broadcast packet is inserted to the ring again through layer 2 forwarding and is span-ring inserted to the RPR ring2.

Block 140: When the broadcast packet passes the node B in the RPR ring2, the broadcast packet is copied from the node B while being broadcast in the RPR ring2.

Block 150: According to the identity information carried in the copied broadcast packet, it is determined whether the broadcast packet is allowed to be span-ring inserted to the RPR ring1 for broadcasting, in other words, the configuration information on the Node B is searched for judging whether span-ring broadcasting is allowed; if it is allowed, performing the block 160; otherwise, performing the block 170.In this embodiment, since the VLAN ID of the broadcast packet is 1000 and is not in the allowed range of 2049-4094 of the node B, the broadcast packet is not allowed to be span-ring inserted to the RPR ring1, and jumping to block 170.

Block 160: The span-ring broadcasting of the packet is allowed, in other words, the copied broadcast packet is inserted to the ring again through layer 2 forwarding and is span-ring inserted to the RPR ring2.

Block 170: The copied broadcast packet is discarded.

For the broadcast packet which passes the node B in block 140 and is broadcast in the RPR ring2, when the broadcast packet comes back to Node A in the RPR ring2, the broadcast packet is stripped by the Node A because the Node A is a source node and the broadcast packet is inserted to the RPR ring2 from the source node. Thus, the broadcast for the span-ring service is finished.

In the RPR ring1, for the broadcast packet which passes the node A in block 110 and is broadcast in the RPR ring1, when the broadcast packet passes the node B, it is also necessary to determine whether the span-ring broadcasting of the broadcast packet is allowed. The principle is same as above, and the description thereof will not be repeated.

The VLAN ID is taken as an example for illustration. Other control conditions may also be used, such as the MAC address information, RPR ID, IP address information and any combination thereof.

After the implementation the method according to the embodiment of the present invention, the path for broadcasting the broadcast packet between the RPR intersection rings is shown as Figure 10. Taking the node A in the RPR ring1 as an example, after the broadcast packet is inserted to the ring from the Node Q, the broadcast packet is broadcast in the RPR ring1 first. When the broadcast packet reaches node A, the broadcast packet is copied and the copied broadcast packet is span-ring inserted to the RPR ring2 to be broadcast in RPR ring2. When the broadcast packet reaches node B, the broadcast packet is copied, but the broadcast packet is not allowed to be span-ring inserted to the RPR ring1 by the node B. Hence, the broadcast packet is discarded. When the broadcast packet being broadcast in the RPR ring2 comes back to the source node A, the broadcast packet is stripped. The processing of the node B is the same as that of the Node A.

The method according to the embodiment of the present invention may also be applied to a networking structure with a plurality of RPR rings intersected. The forwarding process for a packet by the intersection nodes is similar to that in the above description.

It can be understood by those skilled in the art that all or part of the blocks in the method according to the above embodiment may be implemented through instruction of relevant hardware by a program. The program may be stored in a computer readable storage medium, such as ROM/ RAM, diskette and optical disc.

It is obvious that in the embodiment of the present invention, the span-ring service packets are forwarded at each of the intersection nodes of the RPR intersection rings, so that each intersection node processes packets with different VTAN ranges. Hence, the pressure on forwarding packets to each other by intersection nodes is reduced and the load balancing of the span-ring services is achieved. Meanwhile, because the intersection nodes implement a control strategy for the span-ring broadcasting of the packets, the span-ring broadcast storm is avoided.

It is evident that those skilled in the art may make various changes and modifications to the present invention without departing from the scope thereof. Therefore, the present invention is intended to include these changes and modifications falling within the scope of the appended claims and equivalents thereof.

## Claims

1. A method for forwarding packets of resilient packet intersection rings, comprising:
receiving, by an intersection node, a broadcast packet from a first resilient packet ring and copying the broadcast packet to generate a new broadcast packet;
broadcasting, by the intersection node, the broadcast packet in the first resilient packet ring; and
judging, by the intersection node, whether the new broadcast packet is allowed to be span-ring inserted to a second resilient packet ring for broadcasting according to identity information carried in the new broadcast packet and a span-ring broadcast control list; if it is allowed, inserting the new broadcast packet to the second resilient packet ring for broadcasting; otherwise, discarding the new broadcast packet;
wherein an intersection of control conditions for allowing span-ring broadcast of all intersection nodes on the resilient packet intersection ring is empty.

2. The method according to claim 1, wherein judging by the intersection node whether the new broadcast packet is allowed to be span-ring inserted to the second resilient packet ring for broadcasting according to the identity information carried in the copied broadcast packet comprises:
if the identity information of the new broadcast packet matches a control condition for allowing crossing rings and broadcasting configured in the intersection node, allowing the new broadcast packet to be span-ring inserted to the second resilient packet ring for broadcasting; otherwise, not allowing the new broadcast packet to be span-ring inserted to the second resilient packet ring for broadcasting.

3. The method according to claim 1, wherein judging by the intersection node whether the new broadcast packet is allowed to be span-ring inserted to the second resilient packet ring for broadcasting according to the identity information carried in the copied broadcast packet and the span-ring broadcast control list comprises:
if the identity information of the new broadcast packet matches a control condition for allowing crossing rings and broadcasting configured in the intersection node, not allowing the new broadcast packet to be span-ring inserted to the second resilient packet ring for broadcasting; otherwise, allowing the new broadcast packet to be span-ring inserted to the second resilient packet ring for broadcasting.

4. The method according to claim 1, wherein the identity information carried in the new broadcast packet comprises at least one of: a Virtual Local Area Network Identity, a Media Access Control address , a Resilient Packet Ring Identity and an Internet Protocol address.

5. A computer program product comprising computer executable instructions, said instructions being adapted to perform the method in accordance with any one of the claims 1 to 4.

6. A device when programmed for carrying out the method of claim 1 for forwarding packets of resilient packet intersection rings, comprising a packet receiving unit (81) adapted to receive a broadcast packet from a first resilient packet ring; said device further comprising:
a packet copying unit (82) adapted to copy the broadcast packet to generate a new broadcast packet;
a packet forwarding unit (83) adapted to insert the new broadcast packet to a second resilient packet ring for broadcasting;
a span-ring broadcast control unit (84) adapted to control the packet forwarding unit to determine whether to insert the new broadcast packet to the second resilient packet ring for broadcasting according to identity information carried in the new broadcast packet and a span-ring broadcast control list ;
wherein an intersection of control conditions for allowing span-ring broadcast of all intersection nodes on the resilient packet intersection ring is empty;
wherein the device further is adapted to broadcast the broadcast packet in the first resilient packet ring.

7. The device according to claim 6, wherein the device further comprises:
a configuration unit (85) adapted to distribute configuration information to the span-ring broadcast control unit, the configuration information comprising a control condition for allowing the new broadcast packet to cross rings and be broadcast.

8. The device according to any one of claims 6 and 7, wherein the device is a layer 2 network device or a layer 3 network device.

9. A device for forwarding packets of resilient packet intersection rings, comprising a configuration layer, a transport layer, a control layer and a forwarding layer, wherein the control layer further comprises a span-ring broadcast control module, the configuration layer is adapted to distribute configuration information to the span-ring broadcast control module in the control layer, when a broadcast packet is transmitted into the control layer from the transport layer, the span-ring broadcast control module in the control layer determines whether the broadcast packet is allowed to be span-rings broadcast according to the configuration; if it is allowed, sending the broadcast packet to the forwarding layer; otherwise, discarding the broadcast packet;
wherein an intersection of control conditions for allowing span-ring broadcast of all intersection nodes on the resilient packet intersection ring is empty;
wherein the device further is adapted to broadcast the broadcast packet in the first resilient packet ring.

10. The device according to claim 9, wherein the device for forwarding packets of the resilient packet intersection ring is a layer 2 network device or a layer 3 network device.

11. The device according to claim 9, wherein the span-ring broadcast control module is adapted to create a span-ring broadcast control list according to the configuration and determine whether to allow the broadcast packet crossing rings or not, the span-ring broadcast control list comprising at least one of: Virtual Local Area Network Identity information , a Media Access Control address information , a resilient packet ring identity information and an Internet Protocol address information.

12. The device according to any of claims 9 to 11, wherein the span-ring broadcast control module comprises at least one span-ring broadcast control list.

## Patentansprüche

1. Verfahren zum Weiterleiten von Paketen von widerstandsfähigen Paket-Überschneidungsringen, mit den folgenden Schritten:
Empfangen eines Rundsendepakets durch einen Überschneidungsknoten von einem ersten widerstandsfähigen Paketring und Kopieren des Rundsendepakets, um ein neues Rundsendepaket zu erzeugen;
Rundsenden des Rundsendepakets durch den Überschneidungsknoten in dem ersten widerstandsfähigen Paketring; und
Beurteilen durch den Überschneidungsknoten, ob das neue Rundsendepaket zum Rundsenden in einen zweiten widerstandsfähigen Paketring span-ring-eingefügt werden darf, gemäß in dem neuen Rundsendepaket geführten Identitätsinformationen und einer Span-Ring-Rundsende-Steuerliste; wenn es erlaubt ist, Einfügen des neuen Rundsendepakets in den zweiten widerstandsfähigen Paketring zum Rundsenden; andernfalls Verwerfen des neuen Rundsendepakets;
wobei eine Schnittmenge von Steuerbedingungen zum Erlauben des Span-Ring-Rundsendens aller Überschneidungsknoten in dem widerstandsfähigen Paket-Überschneidungsring leer ist.

2. Verfahren nach Anspruch 1, wobei das Beurteilen durch den Überschneidungsknoten, ob das neue Rundsendepaket zum Rundsenden in den zweiten widerstandsfähigen Paketring span-ring-eingefügt werden darf, gemäß den in dem kopierten Rundsendepaket geführten Identitätsinformationen Folgendes umfasst:
wenn die Identitätsinformationen des neuen Rundsendepakets mit einer in dem Überschneidungsknoten konfigurierten Steuerbedingung zum Erlauben des Überquerens von Ringen und des Rundsendens übereinstimmen, Erlauben des Span-Ring-Einfügens des neuen Rundsendepakets in den zweiten widerstandsfähigen Paketring zum Rundsenden; andernfalls Nichterlauben des Span-Ring-Einfügens des neuen Rundsendepakets in den zweiten widerstandsfähigen Paketring zum Rundsenden.

3. Verfahren nach Anspruch 1, wobei das Beurteilen durch den Überschneidungsknoten, ob das neue Rundsendepaket zum Rundsenden in den zweiten widerstandsfähigen Paketring span-ring-eingefügt werden darf, gemäß den in dem kopierten Rundsendepaket geführten Identitätsinformationen und der Span-Ring-Rundsende-Steuerliste Folgendes umfasst:
wenn die Identitätsinformationen des neuen Rundsendepakets mit einer in dem Überschneidungsknoten konfigurierten Steuerbedingung zum Erlauben des Überquerens von Ringen und des Rundsendens übereinstimmen, Nichterlauben des Span-Ring-Einfügens des neuen Rundsendepakets in den zweiten widerstandsfähigen Paketring zum Rundsenden; andernfalls Erlauben des Span-Ring-Einfügens des neuen Rundsendepakets in den zweiten widerstandsfähigen Paketring zum Rundsenden.

4. Verfahren nach Anspruch 1, wobei die in dem neuen Rundsendepaket geführten Identitätsinformationen mindestens eine der folgenden Alternativen umfassen: eine Identität des virtuellen lokalen Netzwerks, eine Adresse der Medienzugangskontrolle, eine Identität des widerstandsfähigen Paketrings und eine Internet-Protokoll-Adresse.

5. Computerprogrammprodukt mit computerausführbaren Anweisungen, wobei die Anweisungen dafür ausgelegt sind, das Verfahren nach einem der Ansprüche 1 bis 4 auszuführen.

6. Einrichtung bei Programmierung zum Ausführen des Verfahrens von Anspruch 1 zum Weiterleiten von Paketen von widerstandsfähigen Paket-Überschneidungsringen, umfassend eine Paketempfangseinheit (81), die dafür ausgelegt ist, ein Rundsendepaket aus einem ersten widerstandsfähigen Paketring zu empfangen;
wobei die Einrichtung ferner Folgendes umfasst:
eine Paketkopiereinheit (82), die dafür ausgelegt ist, das Rundsendepaket zu kopieren, um ein neues Rundsendepaket zu erzeugen;
eine Paketweiterleitungseinheit (83), die dafür ausgelegt ist, das neue Rundsendepaket zum Rundsenden in einen zweiten widerstandsfähigen Paketring einzufügen;
eine Span-Ring-Rundsendesteuereinheit (84), die dafür ausgelegt ist, die Paketweiterleitungseinheit zu steuern, um gemäß in dem neuen Rundsendepaket geführten Identitätsinformationen und einer Span-Ring-Rundsendesteuerliste zu bestimmen, ob das neue Rundsendepaket zum Rundsenden in den zweiten widerstandsfähigen Paketring eingefügt wird;
wobei eine Schnittmenge von Steuerbedingungen zum Erlauben eines Span-Ring-Rundsendens aller Überschneidungsknoten in dem widerstandsfähigen Paket-Überschneidungsring leer ist;
wobei die Einrichtung ferner dafür ausgelegt ist, das Rundsendepaket in dem ersten widerstandsfähigen Paketring rundzusenden.

7. Einrichtung nach Anspruch 6, wobei die Einrichtung ferner Folgendes umfasst:
eine Konfigurationseinheit (85), die dafür ausgelegt ist, Konfigurationsinformationen an die Span-Ring-Rundsendesteuereinheit zu verteilen, wobei die Konfigurationsinformationen eine Steuerbedingung dafür, es dem neuen Rundsendepaket zu erlauben, Ringe zu überqueren und rundgesendet zu werden, umfassen.

8. Einrichtung nach einem der Ansprüche 6 und 7, wobei die Einrichtung eine Netzwerkeinrichtung der Schicht 2 oder eine Netzwerkeinrichtung der Schicht 3 ist.

9. Einrichtung zum Weiterleiten von Paketen von widerstandsfähigen Paket-Überschneidungsringen mit einer Konfigurationsschicht, einer Transportschicht, einer Steuerschicht und einer Weiterleitungsschicht, wobei die Steuerschicht ferner ein Span-Ring-Rundsendesteuermodul umfasst, die Konfigurationsschicht dafür ausgelegt ist, Konfigurationsinformationen an das Span-Ring-Rundsendesteuermodul in der Steuerschicht zu verteilen, wenn ein Rundsendepaket aus der Transportschicht in die Steuerschicht übertragen wird, und das Span-Ring-Rundsendesteuermodul in der Steuerschicht gemäß der Konfiguration bestimmt, ob das Rundsendepaket span-ring-rundgesendet werden darf; wenn es erlaubt ist, wird das Rundsendepaket zu der Weiterleitungsschicht gesendet; andernfalls wird das Rundsendepaket verworfen;
wobei eine Schnittmenge von Steuerbedingungen zum Erlauben des Span-Ring-Rundsendens aller Überschneidungsknoten in dem widerstandsfähigen Paket-Überschneidungsring leer ist;
wobei die Einrichtung ferner dafür ausgelegt ist, das Rundsendepaket in dem ersten widerstandsfähigen Paketring rundzusenden.

10. Einrichtung nach Anspruch 9, wobei die Einrichtung zum Weiterleiten von Paketen des widerstandsfähigen Paket-Überschneidungsrings eine Netzwerkeinrichtung der Schicht 2 oder eine Netzwerkeinrichtung der Schicht 3 ist.

11. Einrichtung nach Anspruch 9, wobei das Span-Ring-Rundsendesteuermodul dafür ausgelegt ist, gemäß der Konfiguration eine Span-Ring-Rundsendesteuerliste zu erzeugen und zu bestimmen, ob es dem Rundsendepaket erlaubt wird, Ringe zu überqueren oder nicht, wobei die Span-Ring-Rundsendesteuerliste mindestens eine der folgenden Alternativen umfasst: Identitätsinformationen des virtuellen lokalen Netzwerks, eine Adresseninformation der Medienzugangskontrolle, eine Identitätsinformation des widerstandsfähigen Paketrings und eine Internet-Protokoll-Adresseninformation.

12. Einrichtung nach einem der Ansprüche 9 bis 11, wobei das Span-Ring-Rundsendesteuermodul mindestens eine Span-Ring-Rundsendesteuerliste umfasst.

## Revendications

1. Procédé permettant de transférer des paquets de réseaux en anneaux à commutation de paquets à intersections et à tolérance de pannes, comprenant :
la réception, par un noeud d'intersection, d'un paquet de diffusion depuis un premier réseau en anneau à commutation de paquets à tolérance de pannes, et la copie du paquet de diffusion afin de générer un nouveau paquet de diffusion,
la diffusion, par le noeud d'intersection, du paquet de diffusion dans le premier réseau en anneau à commutation de paquets à tolérance de pannes, et
l'évaluation, par le noeud d'intersection, de ce que le nouveau paquet de diffusion peut être inséré ou non dans la portée des réseaux en anneaux sur un second réseau en anneau à commutation de paquets à tolérance de pannes en vue d'une diffusion en fonction d'informations d'identité transportées dans le nouveau paquet de diffusion et
une liste de commandes de diffusion dans la portée des réseaux en anneaux ; et si cela est autorisé, l'insertion du nouveau paquet de diffusion sur le second réseau en anneau à commutation de paquets à tolérance de pannes en vue d'une diffusion ; sinon, le rejet du nouveau paquet de diffusion,
dans lequel une intersection des conditions de commande, permettant la diffusion dans la portée des réseaux en anneaux de tous les noeuds d'intersection sur le réseau en anneau à commutation de paquets à intersections et à tolérance de pannes, est vide.

2. Procédé selon la revendication 1, dans lequel l'évaluation par l'intermédiaire du noeud d'intersection de ce que le nouveau paquet de diffusion peut être inséré ou non dans la portée des réseaux en anneaux sur le second réseau en anneau à commutation de paquets à tolérance de pannes en vue d'une diffusion en fonction des informations d'identité transportées dans le paquet de diffusion copié comprend :
si les informations d'identité du nouveau paquet de diffusion correspondent à une condition de commande permettant le croisement de réseaux en anneaux ainsi que la diffusion configurée dans le noeud d'intersection, l'autorisation de l'insertion dans la portée des réseaux en anneaux du nouveau paquet de diffusion sur le second réseau en anneau à commutation de paquets à tolérance de pannes en vue d'une diffusion ; sinon, l'interdiction de l'insertion dans la portée des réseaux en anneaux du nouveau paquet de diffusion sur le second réseau en anneau à commutation de paquets à tolérance de pannes en vue d'une diffusion.

3. Procédé selon la revendication 1, dans lequel l'évaluation par l'intermédiaire du noeud d'intersection de ce que l'insertion dans la portée des réseaux en anneaux du nouveau paquet de diffusion sur le second réseau en anneau à commutation de paquets à tolérance de pannes est permise ou non, en vue d'une diffusion en fonction des informations d'identité transportées dans le paquet de diffusion copié et la liste de commandes de diffusion dans la portée des réseaux en anneaux comprend :
si les informations d'identité du nouveau paquet de diffusion correspondent à une condition de commande permettant le croisement de réseaux en anneaux et une diffusion configurée dans le noeud d'intersection, l'interdiction de l'insertion dans la portée des réseaux en anneaux du nouveau paquet de diffusion sur le second réseau en anneau à commutation de paquets à tolérance de pannes en vue d'une diffusion ; sinon, l'autorisation de l'insertion dans la portée des réseaux en anneaux du nouveau paquet de diffusion sur le second réseau en anneau à commutation de paquets à tolérance de pannes en vue d'une diffusion.

4. Procédé selon la revendication 1, dans lequel les informations d'identité transportées dans le nouveau paquet de diffusion comprennent au moins l'une de : l'identité d'un réseau local virtuel, une adresse de commande d'accès au support, l'identité d'un réseau en anneau à commutation de paquets à tolérance de pannes et une adresse au protocole Internet.

5. Programme informatique comprenant des instructions exécutables par un ordinateur, lesdites instructions étant conçues pour exécuter le procédé conformément à l'une quelconque des revendications 1 à 4.

6. Dispositif qui comprend, lorsqu'il est programmé pour exécuter le procédé de la revendication 1 permettant de transférer des paquets de réseaux en anneaux à commutation de paquets à intersections et à tolérance de pannes, une unité de réception de paquets (81) conçue pour recevoir un paquet de diffusion provenant d'un premier réseau en anneau à commutation de paquets à tolérance de pannes, ledit dispositif comprenant en outre :
une unité de copie de paquets (82) conçue pour copier le paquet de diffusion afin de générer un nouveau paquet de diffusion,
une unité de transfert de paquets (83) conçue pour insérer le nouveau paquet de diffusion sur un second réseau en anneau à commutation de paquets à tolérance de pannes en vue d'une diffusion,
une unité de commande de diffusion dans la portée des réseaux en anneaux (84) conçue pour commander l'unité de transfert de paquets afin de déterminer s'il faut insérer le nouveau paquet de diffusion sur le second réseau en anneau à commutation de paquets à tolérance de pannes en vue d'une diffusion en fonction des informations d'identité transportées dans le nouveau paquet de diffusion et une liste de commandes de diffusion dans la portée des réseaux en anneaux,
dans lequel une intersection de conditions de commande, permettant une diffusion dans la portée des réseaux en anneaux de tous les noeuds d'intersection sur le réseau en anneau à commutation de paquets à intersections et à tolérance de pannes, est vide,
dans lequel le dispositif est en outre conçu pour diffuser le paquet de diffusion dans le premier réseau en anneau à commutation de paquets à tolérance de pannes.

7. Dispositif selon la revendication 6, dans lequel le dispositif comprend en outre :
une unité de configuration (85) conçue pour répartir les informations de configuration sur l'unité de commande de diffusion dans la portée des réseaux en anneaux, les informations de configuration comprenant une condition de commande permettant au nouveau paquet de diffusion de croiser les réseaux en anneaux et d'être diffusé.

8. Dispositif selon l'une quelconque des revendications 6 et 7, dans lequel le dispositif est un périphérique de réseau de couche 2 ou un périphérique de réseau de couche 3.

9. Dispositif permettant de transférer des paquets de réseaux en anneaux à commutation de paquets à intersections et à tolérance de pannes, comprenant une couche de configuration, une couche de transport, une couche de commande et une couche de transfert, la couche de commande comprenant en outre un module de commande de diffusion dans la portée des réseaux en anneaux, la couche de configuration étant conçue pour répartir les informations de configuration vers le module de commande de diffusion dans la portée des réseaux en anneaux dans la couche de commande, quand un paquet de diffusion est transmis dans la couche de commande depuis la couche de transport, le module de commande de diffusion dans la portée des réseaux en anneaux, situé dans la couche de commande, détermine si le paquet de diffusion peut être diffusé dans la portée des réseaux en anneaux en fonction de la configuration ; s'il y est autorisé, envoyer le paquet de diffusion vers la couche de transfert ; sinon, se débarrasser du paquet de diffusion,
dans lequel une intersection de conditions de commande, permettant la diffusion dans la portée des réseaux en anneaux de tous les noeuds d'intersection sur le réseau en anneau à commutation de paquets à intersections et à tolérance de pannes, est vide,
dans lequel le dispositif est en outre conçu pour diffuser le paquet de diffusion dans le premier réseau en anneau à commutation de paquets à tolérance de pannes.

10. Dispositif selon la revendication 9, dans lequel le dispositif permettant de transférer des paquets du réseau en anneau à commutation de paquets à intersections à tolérance de pannes est un périphérique de réseau de couche 2 ou un périphérique de réseau de couche 3.

11. Dispositif selon la revendication 9, dans lequel le module de commande de diffusion dans la portée des réseaux en anneaux est conçu pour créer une liste de commandes de diffusion dans la portée des réseaux en anneaux en fonction de la configuration et pour déterminer s'il faut permettre au paquet de diffusion de croiser des réseaux en anneaux ou non, la liste de commandes de diffusion dans la portée des réseaux en anneaux comprenant au moins l'une parmi : les informations sur l'identité du réseau local virtuel, les informations d'adresse à la commande d'accès au support, les informations d'identité d'un réseau en anneau à commutation de paquets à tolérance de pannes et les informations d'une adresse au protocole Internet.

12. Dispositif selon l'une quelconque des revendications 9 à 11, dans lequel le module de commande de diffusion dans la portée des réseaux en anneaux comprend au moins une liste de commandes de diffusion dans la portée des réseaux en anneaux.
